# EUROPEAN PATENT SPECIFICATION

(11) **EP 0 349 344 B1**
(45) Date of publication and mention of the grant of the patent: **23.06.1993**
(21) Application number: 89306678.7
(22) Date of filing: 30.06.1989
(51) Int. Cl.: F16L 39/00

(54) **Connecting device**
Kupplungsvorrichtung
Dispositif de connexion

(30) Priority: 01.07.1988 GB 8815741
(43) Date of publication of application: 03.01.1990
(73) Proprietor: BICC Public Limited Company, London W1X 5FH (GB); CORNING LIMITED, Sunderland SR4 6EJ (GB)
(72) Inventor: Handley, Graham Robert,, Upton Wirral L49 0QG (GB); Pilkington, Ian,, Wrexham Clwyd LL13 7QG (GB)
(74) Representative: Boon, Graham Anthony

(56) References cited:
- DE-A- 1 932 875
- DE-A- 3 440 103
- DE-B- 2 041 291
- FR-A- 1 271 543
- FR-A- 2 336 049

## Description

This invention relates to a connecting device for connecting tubes together. The device of the present invention is particularly intended for connecting together tubes which are to contain optical fibres. In particular, it may be used for connecting tubes in which optical fibres are to be installed by blowing. The term "blowing" as used herein is intended to encompass a method in which blowing is replaced or supplemented by sucking to produce the necessary current of air or other gas. The ensuing description concentrates on tubes for blown fibre installation, but it is to be understood that the connecting device for the present invention can be used in other contexts.

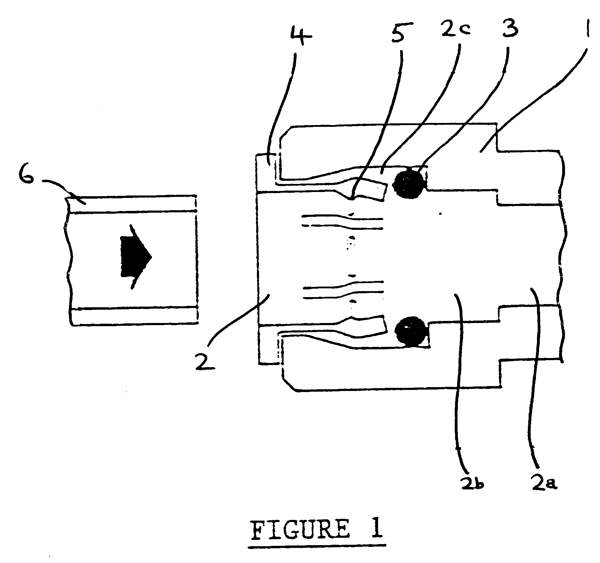

It is known to connect together tubes in which optical fibres are to be installed by blowing, using proprietary push-fit connectors. Figures 1 to 3 of the accompanying drawings show diagrammatically the way in which such a connector is used to attach two tubes together, and Figures 1 to 3 show successive stages. Figure 1 shows the left hand portion of a connector 1, the right hand portion being a mirror image thereof. The connector 1 has an axially extending passage 2 having a central portion 2a of small diameter, an adjacent portion 2b which is of larger diameter, and an end portion 2c which is of still larger diameter. An O-ring seal 3 is located in the passage portion 2c. Also in the portion 2c is a collet 4 having resiliently mounted teeth 5.

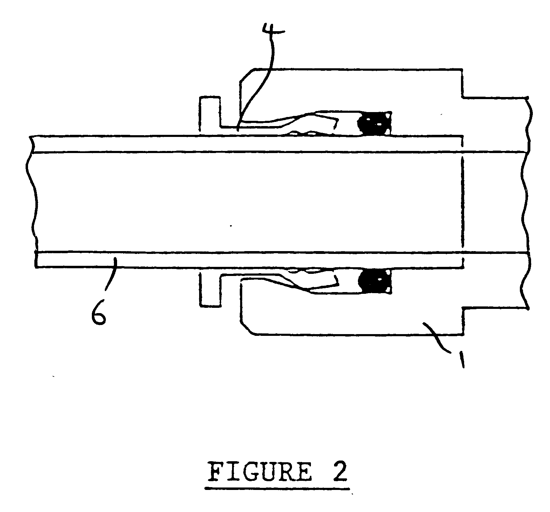

Figure 2 shows a tube 6 which is to be connected to a similar tube. The tube 6 is inserted into the passage 2 until the leading end abuts the step at the junction between the passage portions 2a and 2b. The internal diameter of the portion 2a is selected to be identical to the internal diameter of the tube 6, and the internal diameter of the portion 2b is chosen to be identical to the external diameter of the tube 6. The teeth 5 of the collet 4 grip the tube 6 and the O-ring seal 3 helps to ensure that air pressure within the tube, which exists when a fibre is blown along it, is not lost in the connector. The leading end of a second tube (not shown) identical to the tube 6, to which the connection is to be made is inserted into the right hand portion of the connector 1.

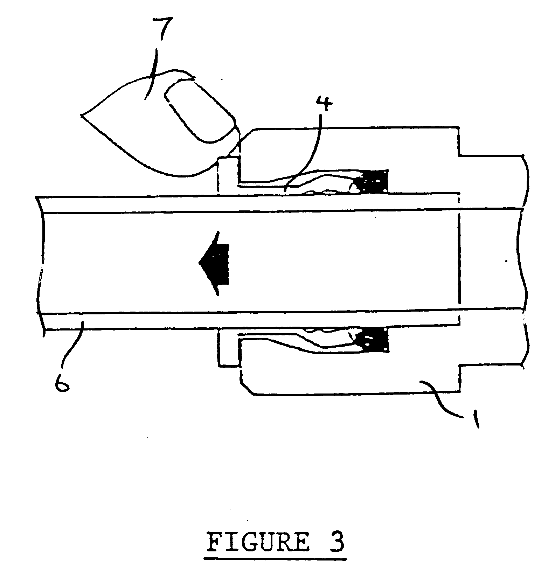

If it is desired to release the tube 6 from the connector this can be done by pushing in the collet 4, as indicated by the representation of a finger 7 in Figure 3.

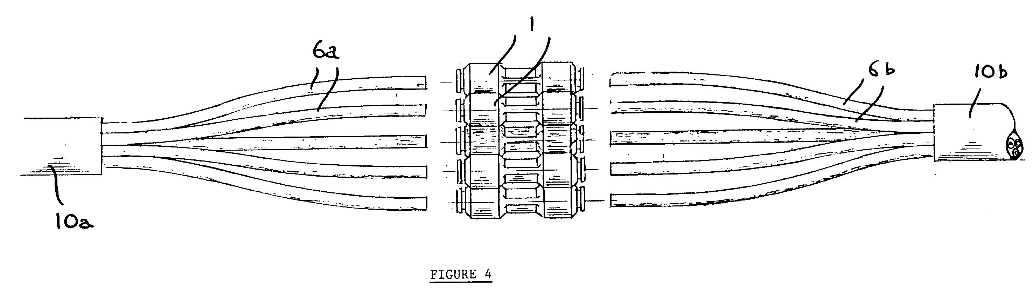

The method of tube connection just described is satisfactory when all that is required at a particular junction is to join one single tube to another single tube. However, situations arise where it is necessary to join one plurality of tubes to another plurality of tubes, and problems arise, particularly as the number of tubes to be joined at a particular junction increases. Figure 4 shows the situation which arises. As illustrated, a first plurality of tubes 6a is housed in a duct 10a which is normally in the form of a tightly fitting sheath and the tubes 6a are to be connected to a second plurality of tubes 6b housed in a similar duct 10b. A plurality of connectors 1 are provided for this purpose. The problems which arise in attempting to perform this connection are as follows:
1. The outer tubes of each bundle of tubes need to be cut longer than those in the centre, and tubes in the same radial layer need to be cut to exactly the same length as one another. Accurate cutting is essential to ensure that the tubes meet neatly together. This is often difficult and if a mistake is made all the tubes have to be re-cut.
2. It is difficult to gain access to connectors in the centre of a connected multi-tube bundle. Access may be necessary if problems occur such as, for example, an incorrectly fitted or leaky connector.
3. The bend radius of individual tubes is difficult to control, an important consideration when blowing fibres.
4. Individual tubes tend to become disorganised and the joint becomes untidy.

It is an object of the present invention to provide a connecting device which eliminates or at least mitigates the problems described above.

DE-A-1932875 describes a connecting device for connecting a first plurality of tubes to a second plurality of tubes, which comprises means defining a first location for the first plurality of tubes to enter the device, means defining a second location for the second plurality of tubes to enter the device, and means for receiving a plurality of tube connectors in such a manner that they are individually adjustable to alter their distances from the first and second locations.

The connecting device of DE-A-1932875 is designed to connect together two mutually perpendicular rows of tubes for the purpose of conveying bulk materials, and uses ball joints to achieve the desired adjustability. DE-B-2041291 shows a connecting device designed to connect together two rows of pneumatic tubes.

According to the present invention there is provided a device of the type defined in the preamble of claim 1, and characterized in that it comprises one or two plates having a plurality of parallel slots, and the said receiving means are each slidably received in a respective one of the slots.

Attention is directed to FR-A-2336049 which describes a device for holding tubes, the device comprising a bar having a row of apertures therein, each aperture being intended to receive a clip for holding a tube.

The invention is further described below with reference to Figures 5 to 11 of the accompanying drawings, in which:
Figure 5 is a plan view of a slotted plate forming part of the connecting device of the present invention;
Figure 6 is an elevational view of one of the plurality of connector retaining clips which are used in the device;
Figure 7 is a plan view of the connecting device showing a first plurality of tubes entering the device;
Figure 8 is a plan view showing the connecting device of the invention in use connecting tubes together;
Figures 9 to 11 show alternative configurations to the one shown in Figure 8.

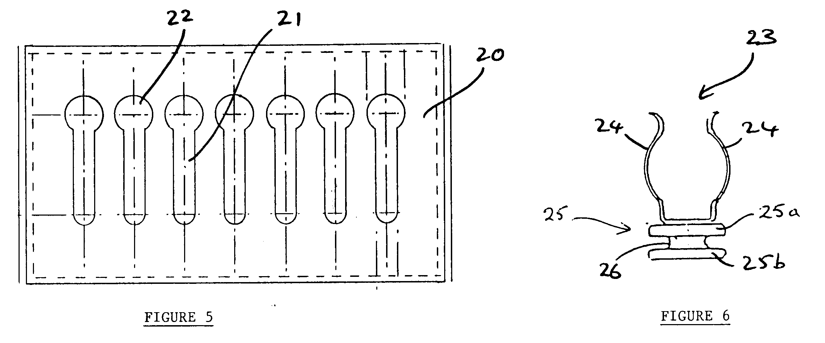

As shown in Figure 5, the connecting device uses a plate 20 having a plurality of parallel slots 21 each having an enlarged portion 22 at one end thereof. Each slot 21 receives a respective connector retaining clip, and one such clip is shown in Figure 6 on a scale larger than that used in Figure 5. Figure 6 shows a clip 23 having a pair of resilient, connector-engaging arms 24 and a base 25 which comprises two flanges 25a and 25b which are circular in plan view. The flanges define between them an annular groove 26, which permits the clip to rotate, or a pair of parallel grooves, which will prevent the clip rotating. The diameter of at least the flange 25b is slightly less than the diameter of the enlarged portion 22 of the groove 21 so that the flange 25b can be inserted into a respective enlarged portion 21. The provision of groove or grooves 26 enables the base then to slide along the remainder of the slot 22. Preferably the flange 25a is larger in diameter than the diameter of the slot portion 22, so that the clip cannot go too far into slot portion 22 and thus possibly fall accidentally through the plate 20.

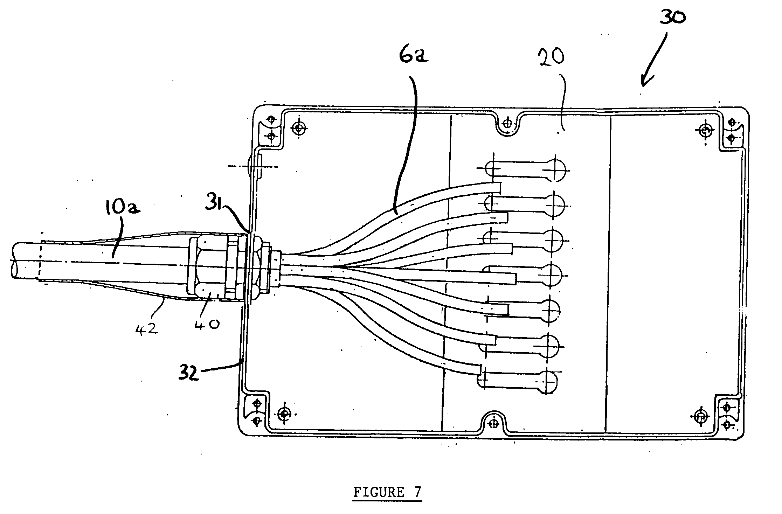

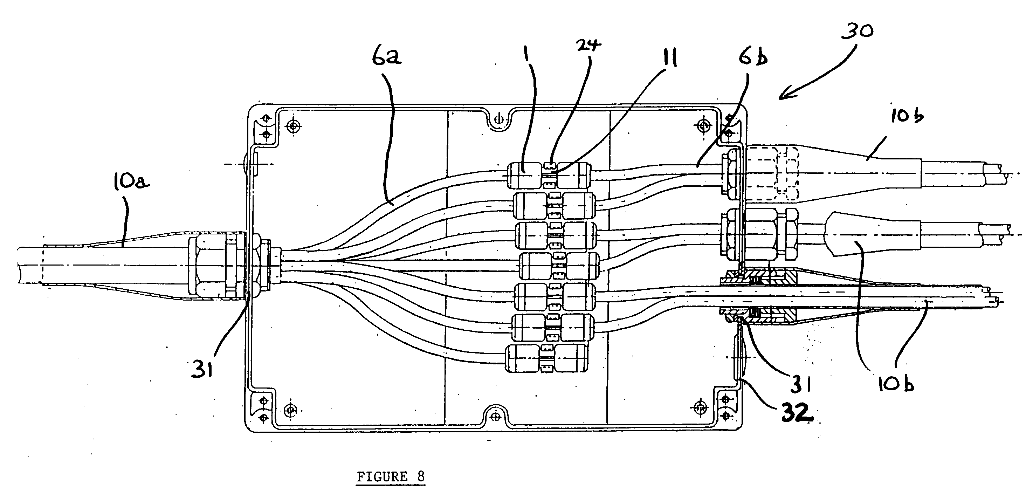

Figure 7 shows a plate 20 mounted in a connecting device denoted generally by reference numeral 30. The device 30 is in the form of a box with a removable or openable cover, and the cover is shown removed so that the interior can be seen. A first plurality of tubes 6a enters the device 30 through an opening 31 in an end wall 32. A sufficient portion of the surrounding duct 10a is trimmed off to allow the leading end of the remaining duct to be secured to the end wall by an anchoring device 40, as illustrated in Figure 8. The individual tubes 6a are cut roughly to equal lengths, though precision is not required. A protective sheath 42 surrounds the end of the duct 10a and the anchoring device 40.

A push-fit connector, for example a connector of the type shown in Figures 1 to 3 is then secured to the leading end of each of the tubes 6a. These connectors are denoted in Figures 8 to 11 by reference numeral 1, like the connector in Figures 1 to 3. A second plurality of tubes 6b is introduced through an opening 31 in an end wall 32 opposite the end wall 32 through which the first plurality of tubes entered. In the configuration illustrated in Figure 8 there are seven tubes 6a and six tubes 6b. One of the tubes 6a is not connected. The six tubes 6b are provided, two each, from three ducts 10b. The ducts 10b are shown differently to one another purely so that different aspects of their construction can be seen, but are in reality identical to one another. The six tubes 6b enter six of the connectors 1 and are connected thereby to respective ones of the tubes 6a.

Each of the connectors 1 has a central portion 11, which is shown as being of lesser diameter than its end portions, though it might not be, and this central portion is gripped by the arms 24 of a respective clip 23. As the clips 23 are free to slide in the slots 21 compensation is provided for variations in the tube lengths and for the fact that the geometry of the arrangement necessitates the ends of the tubes reaching the connector plate at locations which are longitudinally shifted with respect to one another. The sliding clips allow the tubes to follow paths which extend in three dimensions in a relatively gently curved fashion, but with both the tubes and their connectors remaining in an organised array.

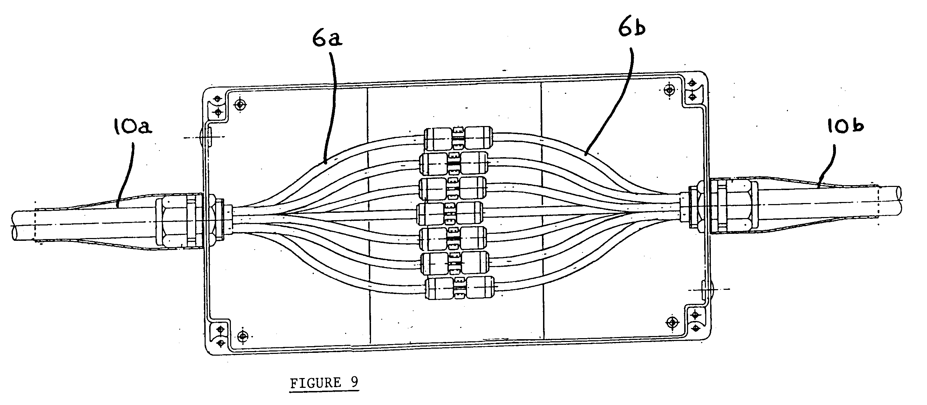

In the configuration shown in Figure 9, the connecting device is used to connect together seven tubes 6a originating from a duct 10a and seven tubes 6b originating from a duct 10b.

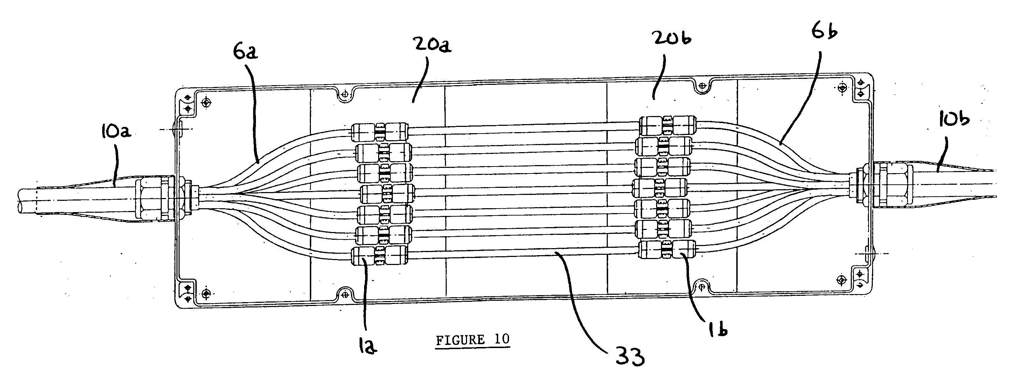

Figure 10 shows a variation in which two slotted plates are used, denoted here by numerals 20a and 20b, with one set of connectors 1a being mounted in the plate 20a and another set of connectors 1b being mounted in the plate 20b. The tubes 6a terminate in the connectors 1a and the tubes 6b terminate in the connectors 1b. The connectors 1a and 1b are then connected by additional tubes 33. This arrangement reduces the degree of distortion in the tubes and may under some circumstances be quicker and easier to use than the arrangements shown in Figures 8 and 9.

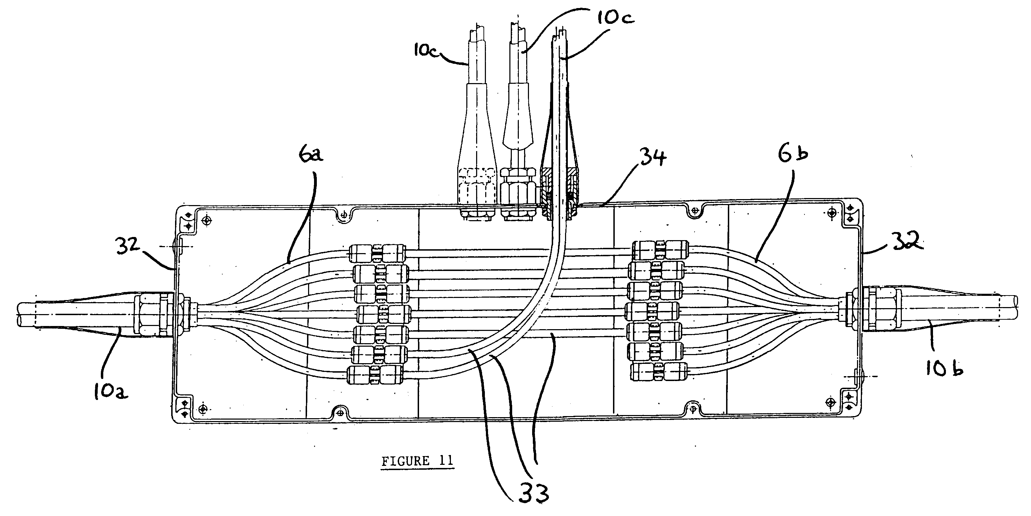

Figure 11 shows a variation on the arrangement of Figure 10. Here, in addition to the seven-tube ducts 10a and 10b there are three two-tube ducts 10c the tubes of which can enter the connecting device through one of the longitudinal walls 34, as opposed to the end walls 32. This enables a "T" connector arrangement to be provided.

It will be apparent that the configurations shown in Figures 8 to 11 are examples only of many configurations which could be used embodying the present invention.

Although the above description refers to the plate 20 or plates 20a and 20b being mounted in a box-type housing, they need not be, and they could, for example be mounted in a rack.

## Claims

1. A connecting device for connecting a first plurality of tubes (6a) to a second plurality of tubes (6b) which comprises means (31) defining a first location for the first plurality of tubes (6a) to enter the device, means (31) defining a second location for the second plurality of tubes (6b) to enter the device, and means (23, 25) for receiving a plurality of tube connectors (1) in such a manner that they are individually adjustable to alter their distances from the first and second locations, characterized in that it comprises one or two plates (20; 20a, 20b) having a plurality of parallel slots (21), and the said receiving means (23, 25) are each slidably received in a respective one of the slots (21).

2. A device according to claim 1, which comprises a first plate (20a) having a first plurality of said parallel slots; a first plurality of said receiving means each slidably received in a respective one of the first plurality of slots, each of the first plurality of tubes (10a) terminating, in use, in a tube connector (1a) received in one of the first plurality of receiving means; a second plate (20b) having a second plurality of said slots; a second plurality of said receiving means each slidably received in a respective one of the second plurality of slots, each of the second plurality of tubes (6b) terminating, in use, in a tube connector (1b) received in one of the second plurality of receiving means; and at least one connecting tube (33), the or each connecting tube (33) interconnecting a tube connector (1a) received in one of the first plurality of receiving means with a tube connector (1b) received in the second plurality of receiving means.

3. A device according to claim 2, wherein each of the said receiving means comprises means (23) for holding a tube connector (1, 1a, 1b); and a base (25) which carries the said holding means (23) and which has a groove (26) or grooves in which the edges of the said slot (21) are received.

4. A device according to claim 3, wherein the said groove (26) is an annular groove.

5. A device according to claim 4, wherein there are a pair of parallel grooves, each for receiving one slot edge.

6. A device according to any one of claims 3 to 5, wherein each slot (21) is a keyhole slot having an enlarged portion (22) into which the said base (25) is at least partly insertable.

7. A device according to any one of claims 3 to 6, wherein the said holding means (23) of each receiving means comprises a clip (23) which can releasably retain a tube connector (1, 1a, 1b).

8. A device according to any preceding claim, comprising a housing (30), the said first and second locations being at opposite ends thereof.

9. A device according to any one of claims 1 to 7, comprising a housing (30), the said first and second locations being in housing walls (32, 34) running transversely to one another.

10. A device according to claim 8, wherein a third plurality of tubes (10c) enter the device transversely to the direction in which the first and second plurality of tubes (10a, 10b) enter.

11. A device according to any one of claims 1 to 7, wherein the said receiving means (23, 25) is mounted in a rack which defines the said first and second locations.

## Patentansprüche

1. Kupplungsvorrichtung zum Verbinden einer ersten Mehrzahl von Schläuchen (6a) mit einer zweiten Mehrzahl von Schläuchen (6b), mit einer eine erste Plazierung der in die Vorrichtung hineingelangenden ersten Mehrzahl von Schläuchen (6b) bildenden Einrichtung (31), mit einer eine zweite Plazierung der in die Vorrichtung gelangenden zweiten Mehrzahl von Schläuchen (6) bildenden Einrichtung (31) und mit Einrichtungen (23, 25) zur Aufnahme einer Mehrzahl von Schlauch-Kupplungen (1) derart, daß sie einzeln einstellbar sind, um deren Abstände von den ersten und zweiten Plazierungen ändern zu können,
**dadurch gekennzeichnet,**
daß sie eine oder zwei Platten (20; 20a, 20b) mit einer Mehrzahl von parallelen Schlitzen (21) aufweist und die Aufnahme- Einrichtungen (23, 25) jeweils verschiebbar in einem dieser entsprechenden Schlitze (21) angeordnet sind.

2. Vorrichtung nach Anspruch 1, dadurch gekennzeichnet, daß sie eine erste Platte (20a) mit einer ersten Mehrzahl von parallelen Schlitzen; wobei eine erste Mehrzahl der Aufnahme-Einrichtungen je in einem entsprechenden der ersten Mehrzahl von Schlitzen verschiebbar angordnet ist, wobei jede der ersten Mehrzahl von Schläuchen (10a) im Gebrauch in einer Schlauch-Kupplung (1a) endet, die sich in einer der ersten Mehrzahl von Aufnahme-Einrichtungen befindet; eine zweite Platte (20b) mit einer zweiten Mehrzahl derartiger Schlitze; wobei eine zweite Mehrzahl der Aufnahme-Einrichtungen jeweils in einem entsprechenden Schlitz der zweiten Mehrzahl von Schlitzen verschiebbar angeordnet ist, wobei die zweite Mehrzahl von Schläuchen (6b) im Betrieb in einer Schlauch-Kupplung (1b) endet, die in einer der zweiten Mehrzahl von Aufnahme-Einrichtungen angordnet ist; und wenigstens einen Verbindungsschlauch (33) aufweist, wobei der oder jeder Verbindungsschlauch (33) eine in einer der ersten Mehrzahl von Aufnahme-Einrichtungen befindliche Schlauch-Kupplung (1) mit einer in der zweiten Mehrzahl von Aufnahme-Einrichtungen befindlichen Schlauch-Kupplung (1b) verbindet.

3. Vorrichtung nach Anspruch 2, dadurch gekennzeichnet, daß jede der Aufnahme-Einrichtungen Einrichtungen (23) zum Halten einer Schlauch-Kupplung (1, 1a, 1b) und einen Sockel (25), der die Haltereinrichtung (23) trägt und der eine Nut (26) oder Nuten zur Aufnahme der Kanten der Schlitze (21) enthält, aufweist.

4. Vorrichtung nach Anspruch 3, dadurch gekennzeichnet, daß die Nut (26) eine ringförmige Nut ist.

5. Vorrichtung nach Anspruch 4, dadurch gekenneichnet, daß zwei parallele Nuten vorgesehen sind, von denen jede zur Aufnahme einer Schlitzkante vorgesehen ist.

6. Vorrichtung nach einem der Ansprüche 3 bis 5, dadurch gekennzeichnet, daß jeder Schlitz (21) ein als Schlüsselkranz bzw. Schlüsselöffnung ausgebildeter Schlitz mit einem erweiterten Abschnitt (22) ist, in welchen der Sockel (25) wenigsten teilweise einsteckbar ist.

7. Vorrichtung nach einem der Ansprüche 3 bis 6, dadurch gekennzeichnet, daß die Halte-Einrichtungen (23) jeder Aufnahme-Einrichtung eine Klemme (23) aufweist, die eine Schlauch-Kupplung (1, 1a, 1b) lösbar halten kann.

8. Vorrichtung nach einem der vorhergehenden Ansprüche, dadurch gekennzeichnet, daß sie ein Gehäuse (30) aufweist, wobei die ersten und zweiten Plazierungen sich an entgegengesetzten Enden des Gehäuses befinden.

9. Vorrichtung nach einem der Ansprüche 1 bis 7, dadurch gekennzeichnet, daß sie ein Gehäuse (30) aufweist, wobei die ersten und zweiten Plazierungen sich in Gehäusewänden (32, 34) befinden, die quer zueinander verlaufen.

10. Vorrichtung nach Anspruch 8, dadurch gekennzeichnet, daß eine dritte Mehrzahl von Schläuchen (10c) quer zur Richtung, in welcher die ersten und zweiten Mehrzahlen von Schläuchen in die Vorrichtung gelangen, in die Vorrichtung eintreten.

11. Vorrichtung nach einem der Ansprüche 1 bis 7, dadurch gekennzeichnet, daß die Aufnahme-Einrichtungen (23, 25) in einer Verzahnung angeordnet sind, welche die ersten und zweiten Plazierungen bildet.

## Revendications

1. Dispositif de raccordement destiné à raccorder une première pluralité de tubes (6a) à une deuxième pluralité de tubes (6b), qui comporte des moyens (31) définissant un premier emplacement destiné à laisser pénétrer la première pluralité de tubes (6a) dans le dispositif, des moyens (31) définissant un second emplacement pour laisser pénéter la deuxième pluralité de tubes (6b) dans le dispositif, et des moyens (23, 25) de réception de plusieurs raccords (1) de tubes de telle manière qu'ils puissent être individuellement réglés pour modifier leurs distances à partir du premier et du second emplacements, caractérisé en ce qu'il comporte une ou deux plaques (20; 20a, 20b) ayant une pluralité de fentes parallèles (21), lesdits moyens de réception (23, 25) étant chacun reçus de manière coulissante dans une fente (21) respective.

2. Dispositif selon la revendication 1, qui comporte une première plaque (20a) ayant une première pluralité dedites fentes parallèles, une première pluralité dedits moyens de réception étant reçus chacun de manière coulissante dans une fente respective de la première pluralité de fentes, chaque tube de la première pluralité de tubes (10a) se terminant, en utilisation, dans un connecteur de tubes (1a) reçu dans un moyen de réception de la première pluralité de moyens de réception, une seconde plaque (20b) ayant une seconde pluralité dedites fentes; une seconde pluralité dedits moyens de réception étant reçus chacun de manière coulissante dans une fente respective de la seconde pluralité de fentes, chaque tube de la seconde pluralité de tubes (6b) se terminant, en utilisation, dans un connecteur de tubes (1b) reçu dans un moyen de réception de la seconde pluralité de moyens de réception; et au moins un tube (33) de liaison, le tube de liaison (33) ou chacun de ceux-ci reliant un connecteur de tubes (1a) reçu dans un moyen de réception de la première pluralité de moyens de réception à un connecteur de tubes (1b) reçu dans la seconde pluralité de moyens de réception.

3. Dispositif selon la revendication 2, dans lequel chacun desdits moyens de réception comporte des moyens (23) pour maintenir un connecteur de tubes (1, 1a, 1b), et une base (25) qui supporte lesdits moyens de retenue (23) et qui comporte une gorge (26) çu des gorges dans lesquelles sont reçus les bords de ladite fente (21).

4. Dispositif selon la revendication 3, dans lequel ladite gorge (26) est une gorge annulaire.

5. Dispositif selon la revendication 4, dans lequel il existe deux gorges parallèles, chacune étant destinée à recevoir un bord de fente.

6. Dispositif selon l'une quelconque des revendications 3 à 5, dans lequel chaque fente (21) est une fente du type trou de serrure ayant une partie agrandie (22) dans laquelle ladite base (25) peut au moins partiellement être insérée.

7. Dispositif selon l'une quelconque des revendications 3 à 5, dans lequel lesdits moyens de retenue (23) de chaque moyen de réception comportent une attache (23) qui peut retenir de manière élastique un raccord de tubes (1, 1a, 1b).

8. Dispositif selon l'une quelconque des revendications précédentes, comportant un boîtier (30), lesdits premier et second emplacements étant situés au niveau d'extrémités opposées de ce dernier.

9. Dispositif selon l'une quelconque des revendications 1 a 7, comportant un boîtier (30), lesdits premier et second emplacements étant situés dans des parois de boîtier (32, 34) agencées transversalement l'une par rapport à l'autre.

10. Dispositif selon la revendication 8, dans lequel une troisième pluralité de tubes (10c) pénètre dans le dispositif transversalement à la direction dans laquelle pénètrent les première et deuxième pluralités de tubes (10a, 10b).

11. Dispositif selon l'une quelconque des revendications 1 à 7, dans lequel lesdits moyens de réception (23, 25) sont montés dans un râtelier qui définit lesdits premier et second emplacements.
